# EUROPÄISCHE PATENTANMELDUNG

(11) **EP 4 119 230 A1**
(43) Veröffentlichungstag der Anmeldung: **18.01.2023**
(21) Anmeldenummer: 22181848.7
(22) Anmeldetag: 29.06.2022
(51) Int. Cl.: B02C 21/02, B02C 23/08, B02C 25/00

(54) **GESTEINSVERARBEITUNGSMASCHINE MIT BILDERFASSUNG UND MIT BILDVERARBEITUNG DURCH EIN NEURONALES NETZWERK**

(30) Priorität: 07.07.2021 DE 102021117537
(71) Anmelder: Kleemann GmbH, 73037 Göppingen (DE)
(72) Erfinder: Häberle, Steffen, 89542 Herbrechtingen (DE); Krauss, Till, 73098 Rechberghausen (DE); Meier, Jochen, 72584 Hülben (DE)
(74) Vertreter: Ruttensperger Lachnit Trossin Gomoll

(57) **Zusammenfassung**

Die vorliegende Erfindung betrifft eine Gesteinsverarbeitungsmaschine (10) zum Zerkleinern oder/und korngößenabhängigen Sortieren von schüttfähigem Gesteinsmaterial (32, 37, 40), wobei die Gesteinsverarbeitungsmaschine (10) wenigstens eine Gesteinsverarbeitungsvorrichtung (22, 36) aus wenigstens einer zerkleinernden Brechervorrichtung (22) und wenigstens einem sortierendem Sieb (36) aufweist, wobei die Gesteinsverarbeitungsmaschine (10) wenigstens eine Kameraanordnung (56, 60) aufweist, in deren Sichtfeld (56a, 60a) sich im Betrieb der Maschine (10) eine Oberfläche des schüttfähigen Gesteinsmaterials (32, 37, 40) befindet, wobei die Maschine (10) eine Datenverarbeitungsvorrichtung (48) aufweist, welche dazu ausgebildet ist, Bilddaten der Kameraanordnung (56, 60) unter Verwendung eines künstlichen neuronalen Netzes zu verarbeiten.

Erfindungsgemäß ist vorgesehen, dass die Datenverarbeitungsvorrichtung (48) dazu ausgebildet ist, in von der Kameraanordnung (56, 60) erfassten und übertragenen Bilddaten wenigstens einen Bildflächenanteil als ein Bildobjekt zu ermitteln und unter Verwendung des künstlichen neuronalen Netzes das ermittelte Bildobjekt zu klassieren hinsichtlich wenigstens einer Objekteigenschaft aus:
- Objektform,
- Objektgröße,
- Objektart und
- Objektmaterial.

## Beschreibung

Die vorliegende Erfindung betrifft eine Gesteinsverarbeitungsmaschine zur Durchführung wenigstens einer Verarbeitung aus Zerkleinern, korngößenabhängigem Sortieren und Fördern von schüttfähigem Gesteinsmaterial. Eine Gesteinsverarbeitungsmaschine zum Zerkleinern von schüttfähigem Gesteinsmaterial ist beispielsweise ein Brecher, wie beispielsweise ein Kegelbrecher, ein Backenbrecher, ein Prallbrecher, ein Walzenbrecher und dergleichen. Eine Gesteinsverarbeitungsmaschine zum korngößenabhängigen Sortieren von schüttfähigem Gesteinsmaterial ist beispielsweise eine Siebanlage. Eine Gesteinsverarbeitungsmaschine zum Fördern kann beispielsweise ein sogenanntes Haldenband sein. Dabei kann eine Gesteinsverarbeitungsmaschine sowohl zum Brechen wie auch zum Sortieren oder/und Fördern von Gesteinsmaterial ausgebildet sein. Bevorzugt ist im Rahmen der vorliegenden Erfindung an mobile Gesteinsverarbeitungsmaschinen gedacht, welche eine Antriebseinrichtung und ein Fahrwerk aufweisen, sodass sie als selbstfahrende Gesteinsverarbeitungsmaschinen unabhängig von Zugmaschinen Ortswechsel vollziehen können. Die nachfolgend auch nur kurz als "Maschine" bezeichnete Gesteinsverarbeitungsmaschine weist daher wenigstens eine Gesteinsverarbeitungsvorrichtung aus wenigstens einer zerkleinernden Brechervorrichtung und wenigstens einer sortierenden Siebvorrichtung auf. Zur Überwachung und zur Unterstützung einer Steuerung eines Gesteinsverarbeitungsprozesses an der Maschine weist die Gesteinsverarbeitungsmaschine wenigstens eine Kameraanordnung auf, in deren Sichtfeld sich im Betrieb der Maschine eine Oberfläche des schüttfähigen Gesteinsmaterials befindet. Dadurch kann die Kameraanordnung einer Gesteinsverarbeitungsvorrichtung zugeführtes oder von dieser weggeführtes Gesteinsmaterial erfassen und Bilddaten bereitstellen, welche das erfasste Gesteinsmaterial repräsentieren. Die Maschine weist weiter eine Datenverarbeitungsvorrichtung auf, welche dazu ausgebildet ist, Bilddaten der Kameraanordnung unter Verwendung eines künstlichen neuronalen Netzes zu verarbeiten.

Eine solche Gesteinsverarbeitungsmaschine in Gestalt einer Zerkleinerungsmaschine ist aus der WO 2019/053261 A1 bekannt. Diese Druckschrift offenbart ganz allgemein ein Betriebsverfahren für eine Gesteins-Zerkleinerungsmaschine, gemäß welchem wenigstens ein Sensorsignal erhalten wird, welches sich auf die Gesteinszufuhr zu der Zerkleinerungsmaschine bezieht. Das Sensorsignal kann beispielsweise durch Bilderfassung erhalten werden.

Ein erster Zerkleinerungsparameter des zugeführten Gesteins wird unter Verwendung eines Modells aus dem wenigstens einen Sensorsignal bestimmt. Unter Verwendung wenigstens eines Parameters der Zerkleinerungsmaschine oder/und einer Zerkleinerungsvorrichtung in der Zerkleinerungsmaschine wird ein zweiter Zerkleinerungsparameter bestimmt.

Mithilfe des zweiten Zerkleinerungsparameters als einem Korrekturparameter und des wenigstens einen Sensorsignals wird das Modell aktualisiert, unter dessen Verwendung der erste Zerkleinerungsparameter aus dem wenigstens einen Sensorsignal bestimmt wird.

Die Definition eines ersten Zerkleinerungsparameters des zu verarbeitenden Gesteins oder/und die Aktualisierung eines Modells kann gemäß der WO 2019/053261 A1 unter anderem durch mehrschichtige Lernmethoden ("deep learning") oder durch ein künstliches neuronales Netzwerk bewirkt werden.

Der zweite Zerkleinerungsparameter wird bestimmt anhand wenigstens eines Parameters aus dem Energieverbrauch wenigstens einer Zerkleinerungsvorrichtung, einem Beladungs- oder Füllniveau einer Zerkleinerungsvorrichtung, einer Geschwindigkeit einer Zerkleinerungsvorrichtung, einer Stück-Beladung der Zerkleinerungsvorrichtung, einer der Zerkleinerungsvorrichtung zugeführten Ausgangs-Korngröße und einer von der Zerkleinerungsvorrichtung weggeführten erzeugten Korngröße.

Der erste oder/und der zweite Zerkleinerungsparameter ist bzw. sind ein Arbeits- oder Leistungsindex oder ein Satz von Arbeits- und Leistungsindizes.

Der erste Zerkleinerungsparameter wird herangezogen, um die Zerkleinerungsmaschine zu steuern. Diese Steuerung umfasst eine Anpassung der Beladung der Maschine, eine Anpassung einer Zufuhr-Tonnage, eine Anpassung einer Wasserzufuhr, eine Modifikation der Gesteinsmischung, eine Anpassung von Transportband-Geschwindigkeiten und eine Anpassung der Geschwindigkeit der Zerkleinerungsvorrichtung.

Über diese allgemeine Offenbarung geht die WO 2019/053261 A1 hinsichtlich der Verwendung neuronaler Netze in einer Steuerungsvorrichtung einer Zerkleinerungsmaschine nicht hinaus.

Aus der DE 10 2019 204 103 A1 ist ein Verfahren zur Grobklassifizierung der Partikelgrößenverteilung eines Schüttguts unter Anwendung einer klassischen Bildverarbeitung offenbart. Gemäß der DE 10 2019 204 103 A1 wird eine Oberfläche des Schüttguts durch eine Kamera aufgenommen. In dieser Aufnahme werden zusammenhängende Flächen gesucht und für jede identifizierte zusammenhängende Fläche ein repräsentativer Durchmesser ermittelt. Für die ermittelten Durchmesser werden deren Durchschnittswert und Streuung bestimmt. Als Klassifikator wird ein Produkt aus dem Durchschnittswert und der Streuung ermittelt.

Aufgabe der vorliegenden Erfindung ist es, den Maschinenführer einer Gesteinsverarbeitungsmaschine durch Weiterentwicklung der eingangs genannten Maschine zu entlasten und eine Steuerung der an der Maschine durchgeführten Gesteinsverarbeitung nach möglichst objektiven Kriterien zu ermöglichen.

Diese Aufgabe wird gemäß der vorliegenden Erfindung durch eine Gesteinsverarbeitungsmaschine der eingangs genannten Art gelöst, deren Datenverarbeitungsvorrichtung dazu ausgebildet ist, in von der Kameraanordnung erfassten und übertragenen Bilddaten wenigstens einen Bildflächenanteil als ein Bildobjekt zu ermitteln und unter Verwendung des künstlichen neuronalen Netzes das ermittelte Bildobjekt zu klassieren hinsichtlich wenigstens einer Objekteigenschaft aus:
- Objektform,
- Objektgröße,
- Objektart und
- Objektmaterial.

Dabei soll nicht ausgeschlossen werden, dass auch das aus den Bilddaten ermittelte Bildobjekt mithilfe eines künstlichen neuronalen Netzes ermittelt wird. In der Regel reichen hier jedoch klassische Bildverarbeitungsverfahren aus, um in Bilddaten einer Kameraanordnung Bildflächenanteile als Bildobjekte zu ermitteln.

Erheblicher ist, dass die einmal ermittelten Bildobjekte durch ein künstliches neuronales Netz klassiert und so nicht nur in ihrer Existenz, sondern gleichsam in ihrer Relevanz für die an der Maschine durchgeführte Gesteinsverarbeitung erfasst werden. Hierzu kann das künstliche neuronale Netz semantische Segmentierung anwenden, um einem Bildpunkt (Pixel) oder einer Gruppe von Bildpunkten wenigstens eine der genannten Objekteigenschaften zuzuweisen.

Bei korrekter Ermittlung von Bildobjekten aus den Bilddaten der wenigstens einen Kameraanordnung repräsentiert das ermittelte Bildobjekt ein reales Phänomen, welches durch die Klassierung als einer Gesteinsverarbeitungsvorrichtung zugeführtes körperliches Objekt erkannt und von nicht-körperlichen Phänomenen, wie etwa "Himmel", oder von nicht zur Verarbeitung vorgesehenen körperlichen Objekten, wie etwa Abschnitten der Gesteinsverarbeitungsmaschine, unterschieden werden kann.

Hinsichtlich der Objektform kann beispielsweise zwischen runden und kantigen Bildobjekten unterschieden werden. Innerhalb der Klasse von runden Bildobjekten kann zwischen eher kugelförmigen und eher länglichen, also ellipsoiden Bildobjekten unterschieden werden. Zusätzlich oder alternativ können erkannte kantige Bildobjekte hinsichtlich der Anzahl ihrer Kanten oder/und zueinander abgewinkelten Flächen unterschieden werden. Dabei ist natürlich klar, dass das in einer Gesteinsverarbeitungsmaschine zu verarbeitende oder verarbeitete Gesteinsmaterial keine Regelgeometrien aufweist. Dennoch können beispielsweise anhand von Schwellenwerten, die über- oder unterschritten werden, Grade unterschiedlicher Kantigkeit der ermittelten Bildobjekte, etwa eine höhere, mittlere und geringe Kantigkeit, unterschieden werden.

Ebenso kann eine Objektgröße beispielsweise als eine größte in den verarbeiteten Bilddaten auftretende Abmessung eines hinsichtlich seiner Objektgröße zu klassierenden Bildobjekts, als mittlere Abmessung aus einer Mehrzahl von unterschiedlich orientierten Abmessungen des Bildobjekts oder als Kantenlänge oder Diagonale eines das Bildobjekt in den Bilddaten einfassenden Rahmens oder Kastens ermittelt werden. Beispielsweise kann über die Ermittlung von Objektgrößen von mehreren durch die Kameraanordnung erfassten Objekten, welche in den Bilddaten als Bildobjekte ermittelt wurden, eine Objektgrößenverteilung im Sichtfeld der Kameraanordnung ermittelt werden. Dadurch kann unterschieden werden, ob das schüttfähige Gesteinsmaterial wenige große und, im Verhältnis dazu, zahlreiche sehr kleine Objekte enthält, oder ob das Gesteinsmaterial eher homogen ist und im Wesentlichen Objekte ein und derselben Größenklasse umfasst.

Hinsichtlich der Objektart kann unterschieden werden zwischen grundsätzlich von der Gesteinsverarbeitungsmaschine oder von wenigstens einer ihrer Gesteinsverarbeitungsvorrichtungen bearbeitbaren Objektarten und nicht bearbeitbaren Objektarten. Gerade wenn beispielsweise abgebrochener Beton als schüttfähiges Gesteinsmaterial in die Gesteinsverarbeitungsmaschine eingegeben wird, enthält das eingegebene Material häufig auch Fremdmaterial aus Metall, wie beispielsweise Armierungen und dergleichen, oder aus Holz, welche entweder nicht durch die Gesteinsverarbeitungsmaschine bearbeitbar sind und daher gegebenenfalls ausgesondert werden müssen, oder nicht zur Bearbeitung durch die Gesteinsverarbeitungsmaschine bestimmt sind. Die Objektart kann daher zwischen Gestein und Fremdkörper und innerhalb dieser Objektarten, je nach weiterer klassierter Objekteigenschaften, nach unterschiedlichen Gesteinen oder/und nach unterschiedlichen Fremdkörpern unterscheiden.

Die Klassierung nach Objektmaterial kann unterschiedliche Gesteinsmaterialien zu unterscheiden helfen, ebenso wie weitere in die Gesteinsverarbeitungsmaschine eingeladene gesteinsfremde Materialien, wie Metall, Erde, Sand, Holz und dergleichen. Die oben genannten Objekteigenschaften stellen keine abschließende Aufzählung dar. Zu den genannten vier besonders wichtigen Objekteigenschaften können weitere hinzutreten, etwa eine Objektfeuchtigkeit usw.

Bevorzugt kann die Datenverarbeitungsvorrichtung unter Verwendung des künstlichen neuronalen Netzes eine Mehrzahl von, vorzugsweise alle der oben genannten Objekteigenschaften ermitteln, um so eine möglichst umfassende Erkennung, Bewertung bzw. Beurteilung des in die Gesteinsverarbeitungsmaschine eingeladenen schüttfähigen Gesteinsmaterials zu ermitteln.

Durch die auswertende Verarbeitung des Bildmaterials der Kameraanordnung mittels eines künstlichen neuronalen Netzwerks kann die Erkennung und Beurteilung des in die Gesteinsverarbeitungsmaschine eingeladenen Gesteinsmaterials losgelöst vom subjektiven Empfinden des Maschinenführers objektiviert werden. Darüber hinaus kann der Maschinenführer von den durch das neuronale Netzwerk übernommenen Aufgaben entlastet werden. Er kann sich damit mit größerem Zeitanteil anderen Aufgaben widmen. Sofern menschliches Eingreifen in die Gesteinsverarbeitung durch die Maschine notwendig sein sollte, kann dieses durch den Maschinenführer nach wie vor erfolgen. Es ist jedoch in der Regel erheblich seltener notwendig als ohne die vorliegende Erfindung.

Die Kameraanordnung kann eine oder mehrere Kameras umfassen. Im Falle der Verwendung mehrerer Kameras in einer Kameraanordnung können die Sichtfelder der einzelnen Kameras derselben Kameraanordnung überlappen, um in der Perspektive einer Kamera verdeckte Bereiche des schüttfähigen Gesteinsmaterials durch eine weitere Kamera zu erfassen. Die Sichtfelder der einzelnen Kameras können sich darüber hinaus teilweise oder vollständig aneinander anschließen, sodass mehrere Kameras oder jede Kamera derselben Kameraanordnung einen anderen Flächenbereich einer Oberfläche von Gesteinsmaterial erfassen bzw. erfasst. Dadurch kann aus den einzelnen Sichtfeldern der Kameras ein besonders großes kumulatives Sichtfeld der Kameraanordnung erhalten werden.

Das Sichtfeld einer Kameraanordnung kann auf einen Abschnitt einer Förderstrecke zur Förderung von Gesteinsmaterial an oder in der Maschine gerichtet sein. Die Förderstrecke kann gebildet sein durch eine Bandfördereinrichtung, einen Vibrationsförderer und dergleichen. Das Sichtfeld der Kameraanordnung bildet dann einen in der Regel relativ zum Maschinenrahmen der Gesteinsverarbeitungsmaschine starren Ausschnitt, durch welchen hindurch Gesteinsmaterial im Betrieb der Maschine gefördert wird.

Alternativ oder zusätzlich kann das Sichtfeld einer Kameraanordnung auf einen Abschnitt einer Siebvorrichtung gerichtet sein, etwa auf deren Materialzulauf oder auf den auf dem Sieb aufgegebenen Auftragsvorrat.

Grundsätzlich kann wenigstens eine Kameraanordnung im Materialfluss des schüttfähigen Gesteinsmaterials stromaufwärts der Gesteinsverarbeitungsvorrichtung angeordnet sein. Dann kann anhand der wenigstens einen Kameraanordnung und der Datenverarbeitungsvorrichtung das noch zu verarbeitende Gesteinsmaterial in der Maschine beurteilt werden. Auf Grundlage dieser Beurteilung können gegebenenfalls Betriebsparameter der Maschine eingestellt bzw. verändert werden. Zusätzlich oder alternativ kann wenigstens eine Kameraanordnung stromabwärts der Gesteinsverarbeitungsvorrichtung angeordnet sein. In diesem Fall kann anhand der wenigstens einen Kameraanordnung schüttfähiges Gesteinsmaterial als Bearbeitungsergebnis durch die Gesteinsverarbeitungsvorrichtung erfasst und beurteilt werden. Gegebenenfalls können so Betriebsparameter der Maschine auf Grundlage einer Beurteilung des erzielten Verarbeitungsergebnisses bestimmt oder ausgewählt, eingestellt oder verändert werden.

Bevorzugt ist sowohl wenigstens eine Kameraanordnung stromaufwärts als auch wenigstens eine Kameraanordnung stromabwärts der Gesteinsverarbeitungsvorrichtung angeordnet, sodass nicht nur das von der Gesteinsverarbeitungsvorrichtung zu verarbeitende Gesteinsmaterial sondern auch das durch die Gesteinsverarbeitungsvorrichtung erzielte Bearbeitungsergebnis automatisiert erfasst und durch das künstliche neuronale Netz beurteilt werden kann, was eine besonders präzise automatisierte Prozessführung der Gesteinsverarbeitungsvorrichtung ermöglicht.

Wie bereits durch die vorstehende Beschreibung angedeutet wurde, kann die Datenverarbeitungsvorrichtung zur weiteren objektivierten Nutzung der aus den Bilddaten gewonnenen Erkenntnisse über das schüttfähige Gesteinsmaterial in der Maschine dazu ausgebildet sein, auf Grundlage der wenigstens einen klassierten Objekteigenschaft wenigstens einen Betriebsparameter der Gesteinsverarbeitungsmaschine zu verändern oder/und einen Maschinenbediener über eine empfohlene Änderung von Betriebsparametern zu informieren. Hierzu kann die Datenverarbeitungsvorrichtung beispielsweise auf Grundlage klassierter Objekteigenschaften durch Abfrage von in Datenspeichern der Datenverarbeitungsvorrichtung hinterlegten Datenzusammenhängen zwischen Objekteigenschaften und parametrischer Bewertung derselben, betragsmäßige Parameterwerte dem schüttfähigen Gesteinsmaterial insgesamt oder einzelnen erkannten Objekten zuordnen. Als lediglich ein mögliches Beispiel von vielen sei auf die Zuordnung von Härte- oder/und Festigkeitswerte von klassierten Materialien repräsentierende betragsmäßige Parameterwerte als mögliche betragsmäßige Parameterwerte hingewiesen. Ausgehend von derartigen ermittelten Parameterwerten kann die Datenverarbeitungsvorrichtung steuernd bzw. regelnd in den Betrieb der Gesteinsverarbeitungsmaschine oder einer konkreten Gesteinsverarbeitungsvorrichtung eingreifen.

Abhängig von der Natur der durch die Datenverarbeitungsvorrichtung gesteuerten bzw. geregelten Gesteinsverarbeitungsvorrichtung kann der durch die Datenverarbeitungsvorrichtung veränderbare Betriebsparameter der wenigstens einen Gesteinsverarbeitungsvorrichtung wenigstens ein Parameter sein, welcher ausgewählt ist aus:
- Brechspaltweite einer Brechervorrichtung,
- Antriebsdrehzahl einer Brechervorrichtung,
- Füllgrad einer Brechervorrichtung,
- Fördergeschwindigkeit einer das schüttfähige Gesteinsmaterial fördernden Fördervorrichtung,
- Bewegungsfrequenz wenigstens eines Siebs,
- Bewegungsamplitude wenigstens eines Siebs,
- Identifikation wenigstens einer anzusteuernden, vorzugsweise separaten, Abfördereinrichtung,
- Neigung und Ausrichtung wenigstens einer Fördervorrichtung,
- Abstand eines Magnetabscheiders, etwa zu einer Fördervorrichtung, insbesondere zu einer Material tragenden Oberfläche der Fördervorrichtung oder zu der Oberfläche des geförderten Materials
- Magnetleistung des Magnetabscheiders,
- Antriebsdrehzahl eines Windsichters, und
- Volumenstrom des Windsichters.

Auch diese Aufzählung ist nicht abschließend, sondern gibt lediglich einen vorteilhaften Satz an Parametern an, die durch die Datenverarbeitungsvorrichtung veränderbar sind. Die Datenverarbeitungsvorrichtung kann zur Veränderung von Betriebsparametern Aktuatoren ansteuern, welche an der jeweiligen Gesteinsverarbeitungsvorrichtung eine Veränderung wenigstens eines der oben genannten Betriebsparameter bewirken. Als derartige Aktuatoren zählen auch der Antriebsmotor einer Brechervorrichtung, ein Antriebsmotor einer Fördereinrichtung zur Förderung des Gesteinsmaterials, ein Antriebsmotor eines Siebs sowie ein etwaig zwischen Antriebsmotor und angetriebener Vorrichtung zwischenangeordnetes schaltbares Getriebe.

Die genannte Abfördereinrichtung kann eine von der Gesteinsverarbeitungsmaschine gesondert ausgebildete Fördereinrichtung, wie etwa ein Haldenband oder dergleichen sein. Bekannte raupengestützte selbstfahrende Haldenbänder werden von der Anmelderin unter dem Markennamen MOBIBELT^{®} vertrieben.

Zusätzlich oder alternativ zur oben erwähnten datenbankbasierten Parametrisierung klassierter Objekteigenschaften durch die Datenverarbeitungsvorrichtung, kann die Datenverarbeitungsvorrichtung dazu ausgebildet sein, auf Grundlage der wenigstens einen klassierten Objekteigenschaft wenigstens einen betragsmäßigen Wert aus
- einem, optional gewichteten, Mittelwert der Objektgrößenverteilung ein und derselben Objektart,
- der Anzahl pro Zeiteinheit klassierter Objekte,
- der Anzahl unterschiedlicher pro Zeiteinheit klassierter Objektarten,
- der Anzahl unterschiedlicher pro Zeiteinheit klassierter Objektformen,
- der Anzahl unterschiedlicher pro Zeiteinheit klassierter Objektmaterialien, und
- einem, optional gewichteten, Mittelwert eines unterschiedliche Objektarten oder/und Objektformen oder/und Objektmaterialien oder/und Objektgrößen repräsentierenden Parameters,
zu ermitteln. Durch diese Bewertung der klassierten Objekteigenschaften kann wenigstens eine Eigenschaft des schüttfähigen Gesteinsmaterials insgesamt betragsmäßig ausgedrückt und datenmäßig weiterverarbeitet werden. Zu dieser Bewertung können, wie oben angedeutet, statistische Bewertungsverfahren, insbesondere Verfahren der deskriptiven Statistik, herangezogen werden. Auch diese betragsmäßigen Werte können dann zur Steuerung bzw. Regelung der Gesteinsverarbeitungsmaschine bzw. wenigstens einer ihrer Gesteinsverarbeitungsvorrichtungen herangezogen werden.

Dabei kann die Datenverarbeitungsvorrichtung nicht nur steuernd bzw. regelnd in den Betrieb der das Gesteinsmaterial verarbeitenden wenigstens einen Gesteinsverarbeitungsvorrichtung eingreifen, sondern kann auch auf erkannte nahende Probleme in der Gesteinsverarbeitung reagieren. Insbesondere im Zusammenhang mit der Auswertung von Bilddaten wenigstens einer stromaufwärts einer Gesteinsverarbeitungsvorrichtung angeordneten Kameraanordnung kann die Datenverarbeitungsvorrichtung dazu ausgebildet sein, dann, wenn sie als Ergebnis einer Klassierung eines Bildobjekts nach der Objektart das Bildobjekt als ein für wenigstens eine Gesteinsverarbeitungsvorrichtung der Gesteinsverarbeitungsmaschine unverarbeitbares Fremdobjekt klassiert, eine das Fremdobjekt anzeigende Meldung an den Maschinenführer auszugeben oder/und einen Aussonderungsvorgang zur Aussonderung des Fremdobjekts aus dem Materialfluss der Gesteinsverarbeitungsmaschine durch eine Aussonderungsvorrichtung zu starten. Eine solche Aussonderungsvorrichtung kann ein mechanischer Greifer oder Schieber sein, welcher das Fremdobjekt aus dem Materialfluss der Maschine entfernt. Zusätzlich oder alternativ kann die Aussonderungsvorrichtung einen Magneten umfassen, um besonders häufig wiederkehrende Fremdobjekte, wie Armierungen aus weichmagnetischem Stahl, unter Ausnutzung magnetischer Anziehungskräfte aus dem Materialfluss zu entfernen. Es kann jedoch ausreichen, lediglich eine Meldung an den Maschinenführer auszugeben, welcher daraufhin aufgefordert ist, eine Entscheidung über die Aussonderung des Fremdobjekts zu treffen und gegebenenfalls auszuführen.

Gemäß einer möglichen Ausgestaltung der vorliegenden Erfindung kann die Datenverarbeitungsvorrichtung nach einer Klassierung eines Bildobjekts als Fremdobjekt abhängig von dessen ebenfalls klassierter Objektgröße und klassiertem Objektmaterial für kleine oder/und instabile Fremdobjekte keine Maßnahme einleiten, für mittelgroße Fremdobjekte oder/und Fremdobjekte mittlerer Stabilität einen Warnhinweis an den Maschinenführer ausgeben, sowie für Fremdobjekte, die aufgrund ihrer Größe oder/und Stabilität eine Gefahr für die Integrität der nachfolgenden Gesteinsverarbeitungsvorrichtung darstellen, einen automatisierten Aussonderungsvorgang oder einen Stillstand der das Fremdobjekt aktuell fördernden Fördervorrichtung bewirken.

Ebenso kann die Datenverarbeitungsvorrichtung durch die Klassierung von Bildobjekten mittels eines künstlichen neuronalen Netzes zielgerichtet die Auslastung wenigstens einer Gesteinsverarbeitungsvorrichtung oder/und der gesamten Gesteinsverarbeitungsmaschine ermitteln. Auch eine so ermittelte Auslastung kann Grundlage für einen steuernden Eingriff der Datenverarbeitungsvorrichtung in den Betrieb der Gesteinsverarbeitungsmaschine sein. Die Datenverarbeitungsvorrichtung kann daher dazu ausgebildet sein, dann, wenn sie ein Erreichen oder Unterschreiten einer vorbestimmten Schwellenanzahl von pro Zeiteinheit als durch die wenigstens eine Gesteinsverarbeitungsvorrichtung bearbeitbar klassierten Objekten, oder ein Erreichen oder Unterschreiten eines Schwellenvolumens durch eine aus einer Kombination von Anzahl von Objekten und Objektgröße gebildeten Objektvolumens, feststellt, wenigstens eine der folgenden Aktionen zu veranlassen:
- Übertragen einer entsprechenden Information an eine mit der Gesteinsverarbeitungsmaschine zusammenarbeitende Beschickungsvorrichtung,
- Versetzen der Gesteinsverarbeitungsmaschine in einen pro Zeiteinheit weniger Energie verbrauchenden Betriebsmodus, und
- Stillsetzen der Gesteinsverarbeitungsmaschine.

Wie oben bereits erläutert wurde, weist die vorliegend diskutierte Maschine zur Erzielung einer bestmöglichen automatisierten Steuerung bzw. Regelung der in ihr durchgeführten Gesteinsverarbeitung wenigstens zwei Kameraanordnungen auf, wobei jede der wenigstens zwei Kameraanordnungen mit ihrem zugeordneten Sichtfeld längs des Materialflusses in der Gesteinsverarbeitungsmaschine das schüttfähige Gesteinsmaterial an einem anderen Ort erfasst. Für eine vorteilhaft schlanke Bildverarbeitung durch ein künstliches neuronales Netzwerk mit einem möglichst geringen Ressourcenbedarf zur Datenspeicherung ist die Datenverarbeitungsvorrichtung dazu ausgebildet, ermittelte Bildobjekte in Bilddaten von wenigstens zwei der wenigstens zwei Kameraanordnungen auf Grundlage derselben Grundwahrheit hinsichtlich wenigstens einer Objekteigenschaft zu klassieren. Somit ist bevorzugt die Anzahl an Kameraanordnungen unabhängig von der Anzahl an Grundwahrheiten, auf deren Grundlage in Bilddaten der Maschine erfassten Bildobjekten Objekteigenschaften zugeordnet werden. Folglich kann es ausreichen, eine, vorzugsweise eine einzige, Datenbank an der Maschine bereitzustellen, von welcher ausgehend Bilddaten unterschiedlicher Kameraanordnungen durch das künstliche neuronale Netz verarbeitet werden.

Das künstliche neuronale Netz kann zunächst beim Maschinenhersteller angelernt werden, indem dort Materialflüsse von bekanntem schüttfähigem Gesteinsmaterial durch wenigstens eine Kameraanordnung erfasst und die so gewonnenen Bilddaten zur Ermittlung von Bildobjekten verarbeitet werden. Durch manuelle oder teilautomatische semantische Segmentierung kann dann den einzelnen Bildpunkten der Bilddaten je wenigstens eine Objekteigenschaft des bekannten schüttfähigen Gesteinsmaterials zugeordnet werden. So kann sukzessive eine Grundwahrheit ("Ground Truth") erarbeitet werden, auf deren Grundlage das auf ihr aufbauende künstliche neuronale Netzwerk automatisiert semantische Segmentierung auf die Bildpunkte der Bildobjekte der Bilddaten der jeweiligen Maschine anwendet und so die ermittelten Bildobjekte klassiert.

Vorteilhaft ist dabei, wenn die jeweilige Gesteinsverarbeitungsmaschine die ihr im Auslieferungszustand mitgegebene Grundwahrheit bzw. die als Arbeitsgrundlage des bildverarbeitenden künstlichen neuronalen Netzwerks mitgegebene Datenbank weiterentwickeln kann. Daher weist die Datenverarbeitungsvorrichtung in einer bevorzugten Ausführungsform der vorliegenden Erfindung einen Trainingsmodus auf, in welchem es Bedienpersonal möglich ist, das von der Datenverarbeitungsvorrichtung verwendete künstliche neuronale Netz auf Grundlage von Bilddaten wenigstens einer Kameraanordnung der Gesteinsverarbeitungsmaschine zu trainieren. Der Trainingsmodus kann manuell durch das Bedienpersonal aktivierbar und auch wieder beendbar sein.

Um das künstliche neuronale Netzwerk effektiv weiterzuentwickeln, kann der Trainingsmodus wenigstens eine der folgenden Aktionen ermöglichen:
- Zuordnen von Objekteigenschaften zu Bilddaten durch eine Bedienperson, und
- Eingeben von Objekteigenschaften eines in die Gesteinsverarbeitungsmaschine eingeladenen bekannten Gesteinsmaterials und automatisches Zuordnen der eingegebenen Objekteigenschaften zu ermittelten Bildobjekten in erfassten Bilddaten.

Es ist also auch eine Art automatisiertes Lernen des künstlichen neuronalen Netzwerks denkbar, indem beispielsweise ein homogenes bekanntes Gesteinsmaterial in die Maschine eingeladen wird, dessen Korngröße, Material, Form usw. bekannt ist. In diesem Fall kann es ausreichen die bekannten Objekteigenschaften in die Datenverarbeitungsvorrichtung einzugeben und diese durch das künstliche neuronale Netzwerk in Bilddaten des bekannten Gesteinsmaterials ermittelten Bildobjekten in einem Trainingsprozess automatisiert zuordnen zu lassen.

Das ebenfalls genannte manuelle oder teilautomatische Zuordnen von Objekteigenschaften zu Bilddaten bzw. zu ermittelten Bildobjekten durch eine Bedienperson bietet jedoch gegenüber dem oben beschriebenen automatisierten Lernverfahren eine größere Variabilität, weil kein bekanntes Gesteinsmaterial in die Maschine eingeladen werden muss, sondern das aktuell in der Maschine befindliche Gesteinsmaterial durch die Fachkenntnis des Bedienpersonals analysiert werden kann und das Analyseergebnis manuell durch semantische Segmentierung in das künstliche neuronale Netz eingegeben werden kann.

Wenngleich ein Trainieren des künstlichen neuronalen Netzes der Maschine an der Maschine grundsätzlich eine bevorzugte Ausgestaltung der vorliegenden Erfindung ist, erfordert ein derartiger Trainingsmodus erhebliche Datenverarbeitungsressourcen an der Gesteinsverarbeitungsmaschine. Daher kann die Gesteinsverarbeitungsmaschine zur Vermeidung derart umfangreicher Datenverarbeitungsressourcen eine Datenübertragungsvorrichtung aufweisen, welche dazu ausgebildet ist, Bilddaten wenigstens einer Kameraanordnung zu einer von der Gesteinsverarbeitungsmaschine entfernt gelegenen Remote-Datenverarbeitungsvorrichtung zu übertragen. So können an der Maschine Bilddaten eines realen Gesteinsverarbeitungsprozesses zu der Remote-Datenverarbeitungsvorrichtung übertragen werden, wo ausreichend Datenverarbeitungsressourcen bereitgestellt sind, um aus den übertragenen Bilddaten in einem Lernverfahren das künstliche neuronale Netzwerk der Maschine weiterzubilden. Beispielsweise kann an der Remote-Datenverarbeitungsvorrichtung eine Kopie des künstlichen neuronalen Netzes der Maschine installiert sein, welches durch den Trainingsprozess weiterentwickelt wird. Nach dem Trainingsprozess kann durch Datenübertragung zu der Maschine deren künstliches neuronales Netz auf die Entwicklungsstufe des künstlichen neuronalen Netzes der Remote-Datenverarbeitungsvorrichtung aktualisiert werden. Eine solche Aktualisierung kann unmittelbar nach Abschluss des Trainingsprozesses erfolgen oder kann im Rahmen einer Maschinenwartung oder regelmäßiger Update-Zyklen erfolgen.

Zur Durchführung einer Weiterentwicklung des künstlichen neuronalen Netzes der Gesteinsverarbeitungsmaschine an einem von ihr entfernt gelegenen Ort kann die Maschine wenigstens vorübergehend mit der Remote-Datenverarbeitungsvorrichtung datenübertragungsmäßig gekoppelt sein, wobei die Remote-Datenverarbeitungsvorrichtung dazu ausgebildet ist, eine Zuordnung von Objekteigenschaften zu von der Gesteinsverarbeitungsmaschine übertragenen Bilddaten zu gestatten und dadurch eine erweiterte Grundwahrheit des künstlichen neuronalen Netzes der Gesteinsverarbeitungsmaschine zu erzeugen, wobei die erweiterte Grundwahrheit zur Verwendung durch das künstliche neuronale Netz der Gesteinsverarbeitungsmaschine zu deren Datenverarbeitungsvorrichtung übertragbar ist. Die Übertragung der Daten zurück zur Maschine kann durch die Datenübertragungsverbindung erfolgen, beispielsweise per Funk, etwa über ein Mobilfunknetz oder dergleichen, oder kann durch körperliche Datenträger, wie etwa DVD oder USB-Stick, erfolgen, wenn die Aktualisierung des künstlichen neuronalen Netzes durch geplante Updates oder im Laufe einer Maschinenwartung durchgeführt werden soll.

Als besonders leistungsfähig zur Klassierung von in Bilddaten erkannten Bildobjekten haben sich faltende neuronale Netzwerke ("Convolutional Neuronal Networks") erwiesen, weshalb das von der Gesteinsverarbeitungsmaschine verwendete künstliche neuronale Netz bevorzugt ein faltendes neuronales Netzwerk ist.

Die Verwendung der Begriffe "Netz" und "Netzwerk" sind in der vorliegenden Anmeldung synonym gebraucht.

Ein Teil der Bildverarbeitung kann die Überwachung der von der wenigstens einen Kameraanordnung bereitgestellten Bildqualität sein. So kann die Datenverarbeitungsvorrichtung dazu ausgebildet sein, den Bilddaten einer Kameraanordnung, sei es beispielsweise während der Bildverarbeitung oder sei es beispielsweise in einem gesonderten Qualitätssicherungsverfahren, einen Qualitätswert beizumessen, welcher die Qualität der Bilddaten repräsentiert. Ein solcher Qualitätswert kann beispielsweise den Kontrast in den Bilddaten oder/und das in den Bilddaten enthaltene Rauschen oder/und die Abbildungsschärfe der Bilddaten berücksichtigen. So kann die derart ausgebildete Datenverarbeitungsvorrichtung in Weiterbildung der Erfindung dazu ausgebildet sein, dann, wenn ein den Bilddaten einer Kameraanordnung beigemessener Qualitätswert einen für eine zuverlässige Bildverarbeitung erforderlichen vorbestimmten Mindestqualitätswert nicht erreicht, ein Warnsignal auszugeben oder/und eine automatisierte Verfahrensführung der Gesteinsverarbeitung an der Maschine zu beenden. Das Warnsignal hat bevorzugt den Inhalt, das an der Maschine arbeitende Bedienpersonal über die Beendigung automatisierter Betriebsparameteranpassungen zu informieren.

Da die oben beschriebene Bilddatenverarbeitung sowie gegebenenfalls die daraus resultierende Betriebssteuerung einer Gesteinsverarbeitung nicht nur an einer einzigen Gesteinsverarbeitungsmaschine, sondern an mehreren kooperierenden Gesteinsverarbeitungsmaschinen durchgeführt werden kann, betrifft die vorliegende Erfindung auch eine Gesteinsverarbeitungsanlage, umfassend wenigstens zwei Gesteinsverarbeitungsmaschinen wie sie oben beschrieben und weitergebildet sind. Diese Gesteinsverarbeitungsmaschinen der Gesteinsverarbeitungsanlage sind sequentiell in einem gemeinsamen Anlagen-Gesteinsmaterialfluss angeordnet, sodass die im Anlagen-Gesteinsmaterialfluss stromabwärtige Gesteinsverarbeitungsmaschine Gesteinsmaterial erhält, welches zuvor von der stromaufwärtigen der wenigstens zwei Gesteinsverarbeitungsmaschinen verarbeitet wurde. Da also eine Gesteinsverarbeitungsmaschine das Bearbeitungsergebnis einer anderen Gesteinsverarbeitungsmaschine erhält, kann wenigstens ein Betriebsparameter einer Gesteinsverarbeitung durch die stromabwärtige Gesteinsverarbeitungsmaschine auf Grundlage einer Objekteigenschaftsklassierung durch das künstliche neuronale Netz der stromaufwärtigen Gesteinsverarbeitungsmaschine veränderbar sein. Dies ist beispielsweise dann von Vorteil, wenn eine Kameraanordnung der stromaufwärtigen Gesteinsverarbeitungsmaschine durch die stromaufwärtige Gesteinsverarbeitungsmaschine verarbeitetes Gesteinsmaterial erfasst, das künstliche neuronale Netzwerk die Bilddaten dieser Kameraanordnung verarbeitet und ausgehend hiervon den Gesteinsverarbeitungsbetrieb der stromabwärtigen Maschine steuert.

Die zuvor genannten mobilen Halden- oder allgemein Förderbänder sind häufig aufgrund ihrer im Verhältnis zu Brecher- und Siebanlagen großen Förderlängen gut geeignet, um an, insbesondere über, deren Förderstrecke durch die in der vorliegenden Anmeldung beschriebene Bildverarbeitung Daten über das geförderte schüttfähige Gesteinsmaterial zu generieren und zu sammeln und an eine nachfolgend das Gesteinsmaterial übernehmende Gesteinsverarbeitungsmaschine zu übertragen.

Alternativ oder zusätzlich ist denkbar, dass die Kameraanordnung der stromaufwärtigen Gesteinsverarbeitungsmaschine nur ihre Bilddaten an eine Datenverarbeitungsvorrichtung der stromabwärtigen Maschine überträgt und diese in den Bilddaten Bildobjekte ermittelt, mittels eines neuronalen Netzes klassiert und ausgehend von diesem Klassierungsergebnis die stromabwärtige Maschine steuert.

Von besonderer Bedeutung sind die oben beschriebenen Verfahren zur Aktualisierung und Weiterbildung eines künstlichen neuronalen Netzwerks, welches an einer Gesteinsverarbeitungsmaschine, wie sie oben beschrieben und weitergebildet ist, oder an einer Gesteinsverarbeitungsanlage, wie sie zuvor beschrieben und weitergebildet ist, zur Klassierung ermittelter Bildobjekte verwendet wird. Daher betrifft die vorliegende Erfindung auch derartige Verfahren, welche die folgenden Schritte umfassen können:
a) Erfassen von Bilddaten eines schüttfähigen Gesteinsmaterials in der Gesteinsverarbeitungsmaschine oder Gesteinsverarbeitungsanlage,
b) Ermitteln von Bildobjekten in den erfassten Bilddaten durch eine Bildverarbeitungsvorrichtung oder durch eine Bedienperson.

Dann, wenn das Aktualisierungsverfahren ein manuelles, also von wenigstens einer Bedienperson ausgeführtes Aktualisierungsverfahren ist, umfasst das Aktualisierungsverfahren bevorzugt folgende weiteren Verfahrensschritte:
c1a) Zuordnen von Objekteigenschaften zu den ermittelten Bildobjekten durch eine Bedienperson, und
c1b) Gewichten von Verbindungen zwischen Neuronen des künstlichen neuronalen Netzwerks auf Grundlage der erzeugten Zuordnung von Bildobjekten und Objekteigenschaften.

Dann jedoch, wenn das Aktualisierungsverfahren ein oben bereits beschriebenes automatisiertes Verfahren ist, umfasst das Verfahren, den Schritten a) und b) vorausgehend, ein Einladen eines bekannten Gesteinsmaterials in die Gesteinsverarbeitungsmaschine oder Gesteinsverarbeitungsanlage.

Vor oder nach dem Einladen des bekannten Gesteinsmaterials werden bei dem automatisierten Aktualisierungsverfahren Objekteigenschaften des bekannten Gesteinsmaterials in die Datenverarbeitungsvorrichtung eingegeben. Es kann dann ein automatisiertes Zuordnen von Objekteigenschaften zu den ermittelten Bildobjekten durch die Datenverarbeitungsanlage durchgeführt werden.

Auf Grundlage der erzeugten Zuordnung von Bildobjekten und Objekteigenschaften werden Verbindungen zwischen Neuronen des künstlichen neuronalen Netzwerks neu gewichtet.

Dann, wenn das Aktualisierungsverfahren ein Remote-Aktualisierungsverfahren ist, umfasst das Verfahren ein Übertragen der Bilddaten mit den oder ohne die ermittelten Bildobjekten zu einer Remote-Datenverarbeitungsvorrichtung. An diesen Verfahrensschritt können sich die folgenden weiteren Verfahrensschritte anschließen:
c3b) Zuordnen von Objekteigenschaften zu den übertragenen Bilddaten, insbesondere Bildobjekten, durch eine Bedienperson oder/und durch die Remote-Datenverarbeitungsvorrichtung,
c3c) Gewichten von Verbindungen zwischen Neuronen des künstlichen neuronalen Netzwerks auf Grundlage der erzeugten Zuordnung von Bildobjekten und Objekteigenschaften,
c3d) Übertragen der ermittelten Verbindungsgewichte zu wenigstens einer Gesteinsverarbeitungsmaschine oder Gesteinsverarbeitungsanlage, vorzugsweise zu einer Vielzahl von Gesteinsverarbeitungsmaschinen oder/und Gesteinsverarbeitungsanlagen.

Die vorliegende Erfindung wird nachfolgend anhand der beiliegenden Zeichnung näher erläutert werden. Es stellt dar:

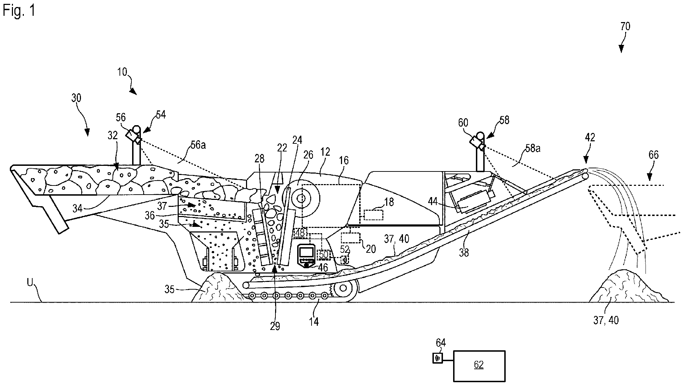

- Figur 1: eine grobschematische Aufrissansicht einer erfindungsgemäßen Ausführungsform einer Gesteinsverarbeitungsmaschine der vorliegenden Anmeldung.

In Figur 1 ist eine beispielhafte Gesteinsverarbeitungsmaschine allgemein mit 10 bezeichnet. Die Maschine 10 umfasst einen Maschinenrahmen 12, welcher über ein an sich bekanntes Raupenfahrwerk 14 auf einem Aufstandsuntergrund U aufsteht. Die Maschine 10 ist folglich eine mobile Gesteinsverarbeitungsmaschine 10, welche mit ihrem Raupenfahrwerk 14 wenigstens von einer Transportvorrichtung, wie etwa einem Tieflader, selbständig zu ihrem Einsatzort fahren kann.

Die Maschine 10 umfasst eine Brennkraftmaschine 16, etwa einen Dieselmotor, welche ein zentrales Kraftwerk der Maschine 10 bildet. Beispielsweise kann die Brennkraftmaschine 16 einen Hydraulikmotor 18 und einen elektrischen Generator 20 antreiben, sodass dann, wenn die Brennkraftmaschine 16 in Betrieb ist, an der Maschine 10 ein vorbestimmtes Hydraulikdruckniveau und eine elektrische Energieversorgung jenseits von lediglich in Batterien gespeicherter elektrischer Energie bereitsteht.

Die Maschine 10 weist eine erste Gesteinsverarbeitungsvorrichtung auf, nämlich einen Backenbrecher 22. Die in Figur 1 rechte Brechbacke 24 wird durch einen Exzenter 26 zu einer reziprozierenden Bewegung auf die in Figur 1 linke maschinenrahmenfeste Brechbacke 28 unter schwellender Änderung des zwischen den Brechbacken 24 und 28 bestehenden Brechspalts 29 zu und von dieser weg angetrieben. Die Bewegung des Exzenters 26 wird durch die Brennkraftmaschine 16 bereitgestellt.

Der Backenbrecher 22 wird über eine Aufgabeeinheit 30 mit im Backenbrecher 22 zu zerkleinerndem Material 32 beschickt. Als eine Fördervorrichtung weist die Maschine 10 eine Aufgaberinne 34 auf, welche das darin aufgegebene Material 32 als Vibrationsförderer zu einem Doppeldecker-Vorsieb 36 fördert. Das Doppeldecker-Vorsieb 36 wird im Betrieb zu einer Kreisschwingung angetrieben und bildet eine zweite Gesteinsverarbeitungsvorrichtung. Dort wird von dem Material 32 ein Feinanteil 35 und ein Anteil 37 mit mittelgroßem Korn getrennt und gesondert vom übrigen Material 32 gefördert. Der Feinanteil 35 kann beispielsweise aus der Maschine 10 ausgeleitet werden. Der Anteil 37 mit mittlerer Korngröße kann direkt auf das Brecherabzugsband 38 als einer weiteren Fördervorrichtung gefördert werden, welches auch das aus dem Backenbrecher 22 nach Durchgang durch diesen austretende zerkleinerte Material 40 vom Backenbrecher 22 weg zu einem Abwurfort 42 fördert, von wo aus das bestimmungsgemäß zerkleinerte Material 40 aufgeschüttet wird.

Längs der Förderstrecke vom Brechspalt 29 zum Abwurfort 42 wird das Material 37 und 40 an einem Magnetabscheider 44 vorbeigeführt. Der mit elektrischer Energie betriebene Magnetabscheider 44, welcher aus dem zerkleinerten Material 37 und 40 ferromagnetische Anteile, wie etwa Stahlarmierungen, magnetisch aussondert und das ausgesonderte ferromagnetische Material in einer von der Zeichenebene von Figur 1 abstehenden Richtung vom Maschinenrahmen 12 weg fördert, ist eine Aussonderungsvorrichtung im Sinne der Beschreibungseinleitung.

Die Maschine 10 kann durch eine beispielhaft seitlich am Maschinenrahmen 12 angeordnete Bedienkonsole 46 bedient und gesteuert werden. Die Bedienkonsole 46 ist datenübertragungsmäßig verbunden mit einer Datenverarbeitungsvorrichtung 48 und einer Datenspeichervorrichtung 50. Die Datenspeichervorrichtung 50 ist ebenfalls mit der Datenverarbeitungsvorrichtung 48 verbunden.

Die Datenverarbeitungsvorrichtung 48 ist ganz allgemein zur Datenverarbeitung an der Gesteinsverarbeitungsmaschine 10 ausgebildet, auch zur Bildverarbeitung. Sie dient auch zur Steuerung von Betriebsabläufen und ist daher auch eine Steuervorrichtung der Gesteinsverarbeitungsmaschine 10. Die Steuervorrichtung der Maschine 10 kann gesondert von der Datenverarbeitungsvorrichtung 48 als eigene Vorrichtung ausgebildet sein, sodass dann die Maschine 10 eine in der Regel Mikroprozessoren umfassende Steuervorrichtung und eine ebenfalls in der Regel Mikroprozessoren umfassende Datenverarbeitungsvorrichtung 48 umfasst. Die beiden gesonderten Vorrichtungen unterscheiden sich dann hinsichtlich der in ihnen ablaufenden Datenverarbeitungsprozesse.

In der Datenspeichervorrichtung 50 sind Parameter für ein neuronales Netzwerk gespeichert, welches in der Datenverarbeitungsvorrichtung 48 durch entsprechende Verschaltung von Mikroprozessoren hardwaretechnisch ausgebildet ist. Zusätzlich oder alternativ kann das neuronale Netzwerk softwaretechnisch durch ein entsprechendes Programm realisiert sein.

Die dem neuronalen Netzwerk angelernte Grundwahrheit ist beispielsweise in der Datenspeichervorrichtung 50 gespeichert. Das neuronale Netzwerk ist ein für den vorliegenden Datenverarbeitungszweck einer automatisierten Klassierung ermittelter Bildobjekte besonders geeignetes faltendes neuronales Netzwerk.

Die Datenverarbeitungsvorrichtung 48 und mit ihr die Datenspeichervorrichtung 50 sind mit einer sendenden und empfangenden Datenübertragungsvorrichtung 52, etwa einer Funkantenne, verbunden. Die Datenübertragungsvorrichtung 52 kann beispielsweise nach dem Standard UMTS oder 5G arbeiten. Andere Datenübertragungsvorrichtungen 52 sind ebenfalls denkbar, beispielsweise WLAN-Zugangspunkte, welche mit weiteren WLAN-Zugangspunkten außerhalb der Maschine 10 in Funkverbindung stehen können. Die weiteren WLAN-Zugangspunkte können dann mittels eines Kabels an ein Datenübertragungsnetzwerk angeschlossen sein.

Über der Aufgabeeinheit 30, genauer über der Aufgaberinne 34, ist ein Gerüst 54 angeordnet, welches eine erste Kameraanordnung 56 trägt. Das Sichtfeld 56a der ersten Kameraanordnung 56 ist auf die Tragseite der Aufgaberinne 34 und damit auf das Gesteinsmaterial 32 gerichtet, welches im Betrieb der Maschine 10 den Gesteinsverarbeitungsvorrichtungen 36 (Doppeldecker-Vorsieb) und 22 (Backenbrecher) zugeführt wird.

Die erste Kameraanordnung 56 liefert Bilddaten an die Datenverarbeitungsvorrichtung 48, welche in den Bilddaten Bildobjekte ermittelt, beispielsweise als zusammenhängende, ausreichend gleichartige Bildflächenbereiche. Das in der Datenverarbeitungsvorrichtung 48 realisierte neuronale Netzwerk klassiert dann auf Grundlage der ihm verfügbaren Grundwahrheit die Bildobjekte nach der Objektformen, Objektgröße, Objektart und dem Objektmaterial. Anhand einer Helligkeit bzw. relativen Helligkeit eines erkannten Objektmaterials kann das neuronale Netz gegebenenfalls auch auf eine Objektfeuchtigkeit schließen.

Ausgehend von den so klassierten Objekteigenschaften der ermittelten Bildobjekte kann die Datenverwaltungsvorrichtung 48 durch Anwendung an sich bekannter statistischer Verfahren die zu erwartenden Verarbeitungsbedingungen ermitteln und hieraus die erforderlichen Betriebsparameter ableiten, mit welchem die Gesteinsverarbeitungsvorrichtungen 22 und 36 sowie die Fördervorrichtungen 34 und 38 betrieben werden sollen, um das gewünschte Verarbeitungsergebnis, etwa hinsichtlich der erreichten Korngröße, zu erzielen.

Über dem Brecherabzugsband 38 ist ein weiteres Gerüst 58 mit einer zweiten Kameraanordnung 60 angeordnet, deren Sichtfeld 60a auf die Tragseite des Brecherabzugsbands 38 und somit während des Betriebs der Maschine 10 auf das schüttfähige Gesteinsmaterial 37 und auf das schüttfähige zerkleinerte Gesteinsmaterial 40 auf dem Brecherabzugsband 38 gerichtet ist.

Auch die zweite Kameraanordnung 60 liefert Bilddaten der Gesteinsmaterialien 37 und 40 an die Datenverarbeitungsvorrichtung 48, in welchen auf die gleiche Weise wie aus den Bilddaten der ersten Kameraanordnung 58 Bildobjekte ermittelt und anhand desselben neuronalen Netzwerks der Datenverarbeitungsvorrichtung 48 auf Grundlage der gleichen Grundwahrheit klassiert werden. Die klassierten Bildobjekte können wiederum unter Anwendung statistischer Verfahren zur Beurteilung der Gesteinsmaterialien 37 und 40 durch die Datenverarbeitungsvorrichtung 48 weiterverarbeitet werden.

Auf Grundlage der Datenverarbeitungsergebnisse der Bilddaten der zweiten Kameraanordnung 60 kann die Datenverarbeitungsvorrichtung 48 überprüfen, ob das gewünschte Arbeitsergebnis erhalten wurde, etwa ob das Gesteinsmaterial ausreichend zerkleinert wurde, und kann gegebenenfalls auf Grundlage der Bilddaten der zweiten Kameraanordnung 60 und ihrer Verarbeitung durch das neuronale Netzwerk und gegebenenfalls durch statistische Verfahren die Betriebsparameter der Gesteinsverarbeitungsvorrichtungen 22 und 36 verändern, um das tatsächliche erhaltene Verarbeitungsergebnis dem gewünschten Soll-Verarbeitungsergebnis anzugleichen. Gleichzeitig können auch Verunreinigungen (bindiges Material, Fremdkörper) erkannt werden und so Kenngrößen zur Qualität des End- oder eines Zwischenprodukts an der Gesteinsverarbeitungsmaschine 10 ermittelt werden.

Gleichzeitig kann das neuronale Netzwerk diese Korrelation von eingegebenem Gestein und verarbeiteten bzw. zerkleinerndem Gestein aus den Bilddaten der Kameraanordnung in 56 und 60 nutzen, um das Steuerungsverhalten der Datenverarbeitungsvorrichtung 48 auf Grundlage des der Maschine 10 eingegebenen Gesteinsmaterials 32 zu verbessern. Somit können in nachfolgenden Gesteinsverarbeitungsabläufen unmittelbar nach Klassieren des eingegebenen schüttfähigen Gesteinsmaterials 32, gegebenenfalls nach weiterer statistischer Verarbeitung der Klassierungsdaten, zu einem früheren Zeitpunkt im Verarbeitungsablauf passendere Betriebsparameter zum Betrieb der Gesteinsverarbeitungsvorrichtungen 22 und 36 eingestellt werden als bei einem früheren Gesteinsverarbeitungsablauf.

Nimmt eine der Kameraanordnungen 56 oder 60 Bilddaten auf, die durch das an der Maschine 10 vorhandene neuronale Netzwerk nur unzureichend zu klassieren sind, können diese Bilddaten über die Datenübertragungsvorrichtung 54 zu einer Remote-Datenverarbeitungsvorrichtung 62 übertragen werden, welche ebenfalls über eine Datenübertragungsvorrichtung 64 verfügt. Dort können die Bilddaten verarbeitet und darin ermittelte Bildobjekte durch manuelle semantische Segmentierung klassiert werden. Die so weiterentwickelte Grundwahrheit kann über die Datenübertragungsvorrichtungen 54 und 64 zurück an die Maschine 10 übertragen werden. So kann das neuronale Netzwerk der Maschine 10 kontinuierlich verbessert und weiterentwickelt werden.

Dann, wenn ein Verarbeitungsergebnis der Maschine 10, etwa die Gesteinsmaterialien 37 und 40 auf dem Brecherabzugsband 38, Ausgangsmaterial für eine weitere Gesteinsverarbeitungsmaschine 66 bildet, kann die zweite Kameraanordnung 58 der Gesteinsverarbeitungsmaschine 10 als erste Kameraanordnung 58 der weiteren Gesteinsverarbeitungsmaschine 66 dienen. Die Datenübertragungsvorrichtung 54 kann dann an die Datenübertragungsvorrichtung der weiteren Gesteinsverarbeitungsmaschine 66 die Bilddaten oder die bereits klassierten und gegebenenfalls statistisch weiter verarbeiteten klassierten Bildobjektinformationen übertragen, welche entweder ihre Gesteinsverarbeitungsvorrichtungen durch ihre Steuer- oder/und Datenverarbeitungsvorrichtung auf Grundlage dieser Bildobjektinformationen steuert oder welche die übertragenen Bildobjektinformationen mit durch eine eigene Kameraanordnung und ein eigenes neuronales Netzwerk erhaltenen Bildobjektinformationen vergleicht bzw. abgleicht und dann Steuerungsmaßnahmen, wie Auswahl von Betriebsparametern und Einstellung von Gesteinsverarbeitungsvorrichtungen und Fördervorrichtungen nach Maßgabe der ausgewählten Betriebsparameter, ergreift.

Die Gesteinsverarbeitungsmaschinen 10 und 66 bilden eine Gesteinsverarbeitungsanlage 70.

## Patentansprüche

1. Gesteinsverarbeitungsmaschine (10) zum Zerkleinern oder/und korngößenabhängigen Sortieren oder/und Fördern von schüttfähigem Gesteinsmaterial (32, 37, 40), wobei die Gesteinsverarbeitungsmaschine (10) wenigstens eine Gesteinsverarbeitungsvorrichtung (22, 36) aus wenigstens einer zerkleinernden Brechervorrichtung (22) und wenigstens einem sortierendem Sieb (36) und einer fördernden Fördervorrichtung (34, 38) aufweist, wobei die Gesteinsverarbeitungsmaschine (10) wenigstens eine Kameraanordnung (56, 60) aufweist, in deren Sichtfeld (56a, 60a) sich im Betrieb der Maschine (10) eine Oberfläche des schüttfähigen Gesteinsmaterials (32, 37, 40) befindet, wobei die Maschine (10) eine Datenverarbeitungsvorrichtung (48) aufweist, welche dazu ausgebildet ist, Bilddaten der Kameraanordnung (56, 60) unter Verwendung eines künstlichen neuronalen Netzes zu verarbeiten,
**dadurch gekennzeichnet, dass** die Datenverarbeitungsvorrichtung (48) dazu ausgebildet ist, in von der Kameraanordnung (56, 60) erfassten und übertragenen Bilddaten wenigstens einen Bildflächenanteil als ein Bildobjekt zu ermitteln und unter Verwendung des künstlichen neuronalen Netzes das ermittelte Bildobjekt zu klassieren hinsichtlich wenigstens einer Objekteigenschaft aus:
- Objektform,
- Objektgröße,
- Objektart und
- Objektmaterial.

2. Gesteinsverarbeitungsmaschine (10) nach Anspruch 1,
**dadurch gekennzeichnet, dass** die wenigstens eine Kameraanordnung (56, 60) im Materialfluss des schüttfähigen Gesteinsmaterials (32, 37, 40) stromaufwärts oder/und stromabwärts der Gesteinsverarbeitungsvorrichtung (22, 36) angeordnet ist.

3. Gesteinsverarbeitungsmaschine (10) nach Anspruch 1 oder 2,
**dadurch gekennzeichnet, dass** die Datenverarbeitungsvorrichtung (48) dazu ausgebildet ist, auf Grundlage der wenigstens einen klassierten Objekteigenschaft wenigstens einen Betriebsparameter der Gesteinsverarbeitungsmaschine (10) zu verändern oder/und einen Maschinenbediener über eine empfohlene Änderung von Betriebsparametern zu informieren.

4. Gesteinsverarbeitungsmaschine (10) nach Anspruch 3,
**dadurch gekennzeichnet, dass** der durch die Datenverarbeitungsvorrichtung (48) veränderbare Betriebsparameter der wenigstens einen Gesteinsverarbeitungsvorrichtung (22, 36) wenigstens ein Parameter ist aus
- Brechspaltweite einer Brechervorrichtung (22),
- Antriebsdrehzahl einer Brechervorrichtung (22),
- Füllgrad einer Brechervorrichtung (22),
- Fördergeschwindigkeit einer das schüttfähige Gesteinsmaterial fördernden Fördervorrichtung (34, 38),
- Bewegungsfrequenz wenigstens eines Siebs (36), und
- Bewegungsamplitude wenigstens eines Siebs (36),
- Identifikation wenigstens einer anzusteuernden, vorzugsweise separaten, Abfördereinrichtung,
- Neigung und Ausrichtung wenigstens einer Fördervorrichtung (34, 38),
- Abstand eines Magnetabscheiders (44) von einer Vorrichtung oder Oberfläche,
- Magnetleistung des Magnetabscheiders (44),
- Antriebsdrehzahl eines Windsichters, und
- Volumenstrom des Windsichters.

5. Gesteinsverarbeitungsmaschine (10) nach Anspruch 3 oder 4,
**dadurch gekennzeichnet, dass** die Datenverarbeitungsvorrichtung (48) dazu ausgebildet ist, auf Grundlage der wenigstens einen klassierten Objekteigenschaft wenigstens einen betragsmäßigen Wert aus
- einem, optional gewichteten, Mittelwert der Objektgrößenverteilung ein und derselben Objektart,
- der Anzahl pro Zeiteinheit klassierter Objekte,
- der Anzahl unterschiedlicher pro Zeiteinheit klassierter Objektarten,
- der Anzahl unterschiedlicher pro Zeiteinheit klassierter Objektformen,
- der Anzahl unterschiedlicher pro Zeiteinheit klassierter Objektmaterialien, und
- einem, optional gewichteten, Mittelwert eines unterschiedliche Objektarten oder/und Objektformen oder/und Objektmaterialien oder/und Objektgrößen repräsentierenden Parameters,
- einer statistischen Auswertung mindestens eines der vorgenannten Parameter
zu ermitteln.

6. Gesteinsverarbeitungsmaschine (10) nach einem der Ansprüche 3 bis 5, **dadurch gekennzeichnet, dass** die Datenverarbeitungsvorrichtung (48) dazu ausgebildet ist, dann, wenn sie ein Objekt als ein für wenigstens eine Gesteinsverarbeitungsvorrichtung (22, 36) der Gesteinsverarbeitungsmaschine (10) unverarbeitbares Fremdobjekt klassiert, eine das Fremdobjekt anzeigende Meldung an den Maschinenführer auszugeben oder/und einen Aussonderungsvorgang zur Aussonderung des Fremdobjekts aus dem Materialfluss der Gesteinsverarbeitungsmaschine durch eine Aussonderungsvorrichtung (44) zu starten.

7. Gesteinsverarbeitungsmaschine (10) nach einem der Ansprüche 3 bis 6, **dadurch gekennzeichnet, dass** die Datenverarbeitungsvorrichtung (48) dazu ausgebildet ist, dann, wenn sie Erreichen oder Unterschreiten einer vorbestimmten Schwellenanzahl von pro Zeiteinheit als durch die wenigstens eine Gesteinsverarbeitungsvorrichtung (22, 36) bearbeitbar klassierten Objekten feststellt, wenigstens eine der folgenden Aktionen zu veranlassen:
- Übertragen einer entsprechenden Information an einen mit der Gesteinsverarbeitungsmaschine (10) zusammenarbeitenden Beschicker,
- Versetzen der Gesteinsverarbeitungsmaschine (10) in einen pro Zeiteinheit weniger Energie verbrauchenden Modus, und
- Stillsetzen der Gesteinsverarbeitungsmaschine (10).

8. Gesteinsverarbeitungsmaschine (10) nach einem der vorhergehenden Ansprüche,
**dadurch gekennzeichnet, dass** sie wenigstens zwei Kameraanordnungen (56, 60) aufweist mit jeweils längs des Materialflusses in der Gesteinsverarbeitungsmaschine (10) an unterschiedlichen Orten erfassenden Sichtfeldern (56a, 60a), wobei die Datenverarbeitungsvorrichtung (48) ermittelte Bildobjekte in Bilddaten von wenigstens zwei der wenigstens zwei Kameraanordnungen (56, 60) auf Grundlage derselben Grundwahrheit hinsichtlich wenigstens einer Objekteigenschaft klassiert.

9. Gesteinsverarbeitungsmaschine (10) nach einem der vorhergehenden Ansprüche,
**dadurch gekennzeichnet, dass** die Datenverarbeitungsvorrichtung (48) einen Trainingsmodus aufweist, in welchem es Bedienpersonal möglich ist, das von der Datenverarbeitungsvorrichtung (48) verwendete künstliche neuronale Netz auf Grundlage von Bilddaten wenigstens einer Kameraanordnung (56, 60) der Gesteinsverarbeitungsmaschine (10) zu trainieren.

10. Gesteinsverarbeitungsmaschine (10) nach Anspruch 9,
**dadurch gekennzeichnet, dass** der Trainingsmodus wenigstens eine der folgenden Aktionen ermöglicht:
- Zuordnen von Objekteigenschaften zu Bilddaten durch eine Bedienperson, und
- Eingeben von Objekteigenschaften eines in die Gesteinsverarbeitungsmaschine (10) eingeladenen bekannten Gesteinsmaterials (32) und automatisches Zuordnen der eingegebenen Objekteigenschaften zu ermittelten Bildobjekten in erfassten Bilddaten.

11. Gesteinsverarbeitungsmaschine (10) nach einem der vorhergehenden Ansprüche,
**dadurch gekennzeichnet, dass** sie eine Datenübertragungsvorrichtung (48) aufweist, welche dazu ausgebildet ist, Bilddaten wenigstens einer Kameraanordnung (56, 60) zu einer von der Gesteinsverarbeitungsmaschine (10) entfernt gelegenen Remote-Datenverarbeitungsvorrichtung (62) zu übertragen.

12. Gesteinsverarbeitungsmaschine (10) nach Anspruch 11,
**dadurch gekennzeichnet, dass** sie wenigstens vorübergehend mit der Remote-Datenverarbeitungsvorrichtung (62) datenübertragungsmäßig gekoppelt ist, wobei die Remote-Datenverarbeitungsvorrichtung (62) dazu ausgebildet ist, eine Zuordnung von Objekteigenschaften zu von der Gesteinsverarbeitungsmaschine (10) übertragenen Bilddaten zu gestatten und dadurch eine erweiterte Grundwahrheit des künstlichen neuronalen Netzes der Gesteinsverarbeitungsmaschine (10) zu erzeugen, wobei die erweiterte Grundwahrheit zur Verwendung durch das künstliche neuronale Netz der Gesteinsverarbeitungsmaschine (10) zu deren Datenverarbeitungsvorrichtung (48) übertragbar ist.

13. Gesteinsverarbeitungsmaschine (10) nach einem der vorhergehenden Ansprüche,
**dadurch gekennzeichnet, dass** das von ihr verwendete künstliche neuronale Netz ein faltendes neuronales Netzwerk ist.

14. Gesteinsverarbeitungsmaschine (10) nach einem der vorhergehenden Ansprüche,
**dadurch gekennzeichnet, dass** die Datenverarbeitungsvorrichtung (48) dazu ausgebildet ist, den Bilddaten einer Kameraanordnung (56, 60) während der Bildverarbeitung oder in einem gesonderten Qualitätssicherungsverfahren einen eine Qualität der Bilddaten repräsentierenden Qualitätswert beizumessen, wobei die Datenverarbeitungsvorrichtung (48) bevorzugt weiter dazu ausgebildet ist, dann, wenn der den Bilddaten beigemessene Qualitätswert einen vorbestimmten Mindestqualitätswert nicht erreicht, ein Warnsignal auszugeben oder/und eine automatisierte Verfahrensführung der Gesteinsverarbeitung an der Maschine zu beenden.

15. Gesteinsverarbeitungsanlage (70) umfassend wenigstens zwei Gesteinsverarbeitungsmaschinen (10, 66) nach einem der vorhergehenden Ansprüche, welche sequentiell in einem gemeinsamen Anlagen-Gesteinsmaterialfluss angeordnet sind.

16. Verfahren zur Aktualisierung und Weiterbildung eines an einer Gesteinsverarbeitungsmaschine (10) nach einem der Ansprüche 1 bis 14 oder an einer Gesteinsverarbeitungsanlage (70) nach Anspruch 15 zur Klassierung ermittelter Bildobjekte verwendeten künstlichen neuronalen Netzwerks, umfassend die folgenden Schritte:
a) Erfassen von Bilddaten eines schüttfähigen Gesteinsmaterials (32, 37, 40) in der Gesteinsverarbeitungsmaschine (10) oder Gesteinsverarbeitungsanlage (70),
b) Ermitteln von Bildobjekten in den erfassten Bilddaten durch eine Bildverarbeitungsvorrichtung (48) oder durch eine Bedienperson, und
c1a) in einem manuellen Aktualisierungsverfahren: Zuordnen von Objekteigenschaften zu den ermittelten Bildobjekten durch eine Bedienperson, und
c1b) Gewichten von Verbindungen zwischen Neuronen des künstlichen neuronalen Netzwerks auf Grundlage der erzeugten Zuordnung von Bildobjekten und Objekteigenschaften, oder
c2a) in einem automatisierten Aktualisierungsverfahren: Eingeben von Objekteigenschaften eines bekannten Gesteinsmaterials in die Datenverarbeitungsvorrichtung (48),
c2b) vor den Schritten a) und b): Einladen des bekannten Gesteinsmaterials in die Gesteinsverarbeitungsmaschine (10) oder Gesteinsverarbeitungsanlage (10),
c2c) nach den Schritten a) und b): automatisiertes Zuordnen von Objekteigenschaften zu den ermittelten Bildobjekten durch die Datenverarbeitungsanlage (48),
c2d) Gewichten von Verbindungen zwischen Neuronen des künstlichen neuronalen Netzwerks auf Grundlage der erzeugten Zuordnung von Bildobjekten und Objekteigenschaften, oder
c3a) in einem Remote-Aktualisierungsverfahren: Übertragen der Bilddaten mit den oder ohne die ermittelten Bildobjekten zu einer Remote-Datenverarbeitungsvorrichtung (62),
c3b) Zuordnen von Objekteigenschaften zu den übertragenen Bilddaten durch eine Bedienperson oder/und durch die Remote-Datenverarbeitungsvorrichtung (62),
c3c) Gewichten von Verbindungen zwischen Neuronen des künstlichen neuronalen Netzwerks auf Grundlage der erzeugten Zuordnung von Bildobjekten und Objekteigenschaften,
c3d) Übertragen der ermittelten Verbindungsgewichte zu wenigstens einer Gesteinsverarbeitungsmaschine (10) oder Gesteinsverarbeitungsanlage (70), vorzugsweise zu einer Vielzahl von Gesteinsverarbeitungsmaschinen (10, 66) oder/und Gesteinsverarbeitungsanlagen (70).
